# FASCICULE DE BREVET EUROPEEN

(11) **EP 3 101 296 B1**
(45) Date de publication et mention de la délivrance du brevet: **25.03.2020**
(21) Numéro de dépôt: 16170903.5
(22) Date de dépôt: 23.05.2016
(51) Int. Cl.: F16D 13/68, F16F 15/123

(54) **MECANISME D'EMBRAYAGE ET GAMME DE MECANISMES D'EMBRAYAGE**
KUPPLUNGSMECHANISMUS UND SORTIMENT AN KUPPLUNGSMECHANISMEN
CLUTCH MECHANISM AND RANGE OF CLUTCH MECHANISMS

(30) Priorité: 01.06.2015 FR 1554972
(43) Date de publication de la demande: 07.12.2016
(73) Titulaire: Valeo Embrayages, 80009 Amiens Cedex 2 (FR)
(72) Inventeur: MARECHAL, Olivier, 80000 LAHOUSSOYE (FR)
(74) Mandataire: Cardon, Nicolas

(56) Documents cités:
- FR-A- 1 290 070
- FR-A1- 2 670 852
- FR-A1- 2 895 770
- US-A1- 2003 062 236

## Description

### DOMAINE TECHNIQUE DE L'INVENTION

L'invention se rapporte à un mécanisme d'embrayage, et plus particulièrement à la liaison entre un disque de friction et un amortisseur de torsion d'un mécanisme d'embrayage.

### ETAT DE LA TECHNIQUE ANTERIEURE

On connaît des amortisseurs de couple pour embrayages de véhicules automobiles, comportant deux rondelles de guidage solidaires l'une de l'autre, un voile situé entre les rondelles de guidage, et des ressorts agencés entre la paire de rondelles de guidage et le voile de manière à travailler lorsque le voile tourne par rapport aux rondelles de guidage. On connaît également, par exemple des documents FR 2 670 852A1 ou FR 1 290 070A, des mécanismes d'embrayage de véhicule automobile incorporant un tel amortisseur et un disque de friction fixé à l'un des organes de l'amortisseur de torsion, à savoir à la paire de rondelles de guidage ou au voile. Il est alors courant d'utiliser des rivets pour fixer le disque de friction en appui direct sur l'organe associé de l'amortisseur de torsion. L'environnement dans lequel vient s'insérer le sous-ensemble formé par l'amortisseur et le disque de friction présente de nombreuses contraintes dimensionnelles, qui rendent généralement nécessaires la conception de pièces spécifiques pour chaque application. En particulier, il est souvent nécessaire d'adapter les formes de l'organe de l'amortisseur de torsion associé au disque de friction, pour répondre par exemple à une exigence de positionnement axial de la surface de friction définie par le disque de friction, sans interférer avec d'autres pièces du mécanisme d'embrayage. Lorsque l'organe de l'amortisseur de torsion associé au disque de friction est réalisé par emboutissage, une certaine latitude existe pour former des bossages plus ou moins saillants axialement en fonction de l'application, le disque de friction venant en appui contre ces bossages qui définissent ainsi sa position axiale. Mais la taille des bossages que l'on peut obtenir par emboutissage sans affaiblir la structure a des limites. De plus ce type de solution va à l'encontre des objectifs industriels de standardisation des pièces et de différentiation retardée des briques technologiques d'un mécanisme d'embrayage.

### EXPOSE DE L'INVENTION

L'invention vise à remédier aux inconvénients de l'état de la technique et à proposer une architecture de mécanisme d'embrayage qui ne soit pas une entrave à la standardisation des pièces et qui, le cas échéant, favorise au contraire la différentiation retardée.

Pour ce faire est proposé, selon un premier aspect de l'invention, un mécanisme d'embrayage comportant: un disque de friction définissant un axe de référence du mécanisme d'embrayage et un amortisseur de torsion qui comporte au moins un organe tournant associé au disque de friction, solidaire du disque de friction, un organe tournant non associé au disque de friction, mobile en rotation autour de l'axe de référence par rapport à l'organe tournant associé au disque de friction, et au moins un ressort agencé de manière à travailler lorsque l'organe tournant non associé au disque de friction tourne par rapport à l'organe tournant associé au disque de friction autour de l'axe de référence. Le disque de friction n'est pas en contact direct avec l'organe tournant associé au disque de friction, une ou plusieurs entretoises étant interposées, de préférence axialement, entre le disque de friction et l'organe tournant associé au disque de friction. On désignera ici par entretoise tout élément avec ou sans fonction de fixation, qui s'interpose entre le disque de friction et l'organe tournant associé et dont les dimensions imposent une distance non nulle entre le disque de friction et l'organe tournant associé.

En modifiant la dimension axiale des entretoises, ou en empilant un nombre plus ou moins grand d'entretoises, il devient ainsi possible de faire varier à loisir la distance axiale entre le disque de friction et l'organe associé. Il est donc possible, à partir de disques de frictions identiques et d'organes associés identiques, d'assembler des mécanismes d'embrayage qui se distinguent les uns des autres par le positionnement du disque de friction par rapport à l'organe associé.

De préférence, la ou les entretoises comportent au moins une entretoise en appui direct sur le disque de friction et au moins une entretoise en appui direct sur l'organe tournant associé au disque de friction. Les entretoises peuvent également inclure des entretoises intermédiaires positionnées entre deux autres entretoises pour former des empilements de plus de deux entretoises.

De préférence, la ou les entretoise ont un pourtour circulaire d'un diamètre compris entre 8 et 15mm.

Suivant un mode de réalisation la ou les entretoises comportent au moins une entretoise en appui direct sur le disque de friction et sur l'organe tournant associé au disque de friction. Il peut s'avérer en effet préférable de ne pas constituer des empilements d'entretoise, pour que la liaison entre le disque de friction et l'organe associé ait une grande rigidité en torsion.

Selon l'invention, le disque de friction est fixé à l'organe tournant associé au disque de friction par des organes de fixation comportant des tiges de fixation. Certains au moins des organes de fixation peuvent être des rivets. Certaines au moins des tiges de fixation peuvent être filetées. Les tiges des organes de fixation traversent le disque de friction et l'organe associé. Selon l'invention, certaines au moins des entretoises sont solidaires des tiges de fixation, et formées d'une pièce avec les tiges de fixation. On peut également prévoir que certaines au moins des entretoises présentent des trous traversés par les tiges de fixation. Ces entretoises sont de préférence formées par des rondelles, de préférence des rondelles planes.

Suivant un mode de réalisation la ou les entretoises sont disposées sur une face de l'organe tournant associé au disque de friction tournée axialement à l'opposé de l'organe tournant non associé au disque de friction.

En pratique, et suivant un mode de réalisation préféré, l'un des organes tournants de l'amortisseur de torsion est formé par deux rondelles de guidage solidaires l'une de l'autre, l'autre des organes tournants de l'amortisseur de torsion étant formé par un voile au moins partiellement logé entre les deux rondelles de guidage.

En pratique, et suivant un mode de réalisation préféré, l'organe non associé au disque de friction est un organe mené, destiné à être solidarisé en rotation à un arbre d'entrée de boîte de transmission. L'organe associé au disque de friction est quant à lui destiné à être entraîné par le moteur du véhicule, lorsque le disque de friction est en prise avec un plateau de friction du mécanisme d'embrayage.

Suivant un mode de réalisation, l'organe tournant associé au disque de friction est une tôle emboutie.

De préférence le disque de friction porte des garnitures de friction.

Suivant un autre aspect de l'invention, celle-ci a trait à une gamme de mécanismes d'embrayage comportant :
- au moins un premier mécanisme d'embrayage conforme au premier aspect de l'invention, comportant un premier disque de friction définissant un premier axe de référence du premier mécanisme d'embrayage, et un premier amortisseur de torsion comportant au moins un organe tournant associé au premier disque de friction et solidaire du disque de friction, un organe tournant non associé au premier disque de friction et mobile en rotation autour du premier axe de référence par rapport à l'organe tournant associé au premier disque de friction, et au moins un premier ressort agencé de manière à travailler lorsque l'organe tournant non associé au premier disque de friction tourne par rapport à l'organe tournant associé au premier disque de friction autour du premier axe de référence, et
- au moins un deuxième mécanisme d'embrayage comportant un deuxième disque de friction définissant un deuxième axe de référence du deuxième mécanisme d'embrayage et un deuxième amortisseur de torsion comportant au moins un organe tournant associé au deuxième disque de friction et solidaire du disque de friction, un organe tournant non associé au deuxième disque de friction et mobile en rotation autour du deuxième axe de référence par rapport à l'organe tournant associé au deuxième disque de friction, et au moins un deuxième ressort agencé de manière à travailler lorsque l'organe tournant non associé au deuxième disque de friction tourne par rapport à l'organe tournant associé au deuxième disque de friction autour du deuxième axe de référence.

En pratique, l'organe tournant associé au premier disque de friction et l'organe tournant associé au deuxième disque de friction sont de préférence identiques.

Suivant un mode de réalisation, le premier disque de friction n'est pas en contact direct avec l'organe tournant associé au premier disque de friction, une ou plusieurs premières entretoises étant interposées axialement entre le premier disque de friction et l'organe tournant associé au premier disque de friction. Le deuxième disque de friction peut être en contact direct avec l'organe tournant associé au deuxième disque de friction ou être distant de l'organe tournant associé au deuxième disque de friction grâce à une ou plusieurs deuxièmes entretoises interposées, de préférence axialement, entre le deuxième disque de friction et l'organe tournant associé au deuxième disque de friction, la ou les deuxièmes entretoises étant agencées de telle manière que l'organe tournant associé au deuxième disque de friction est situé à une distance axiale du deuxième disque de friction différente de la distance axiale entre l'organe tournant associé au premier disque de friction et le premier disque de friction.

De préférence, l'organe tournant non associé au premier disque de friction et l'organe tournant non associé au deuxième disque de friction sont identiques.

De préférence le premier disque de friction et le deuxième disque de friction sont identiques.

On définit ainsi une gamme de mécanismes d'embrayage ayant un ou plusieurs organes communs mais dont la distance entre le disque de friction et l'organe associé varie.

### BREVE DESCRIPTION DES FIGURES

D'autres caractéristiques et avantages de l'invention ressortiront à la lecture de la description qui suit, en référence aux figures annexées, qui illustrent :
- la figure 1, un vue en coupe axiale d'un mécanisme d'embrayage selon un premier mode de réalisation de l'invention;
- la figure 2, un détail d'une entretoise du mécanisme de la figure 1;
- la figure 3, un détail d'un mécanisme d'embrayage selon un deuxième mode de réalisation de l'invention;
- la figure 4, un détail d'un mécanisme d'embrayage selon un troisième mode de réalisation de l'invention;
- la figure 5, un détail d'un mécanisme d'embrayage selon un quatrième mode de réalisation de l'invention;
- la figure 6, un détail d'un mécanisme d'embrayage selon un quatrième mode de réalisation de l'invention.

Pour plus de clarté, les éléments identiques ou similaires sont repérés par des signes de référence identiques sur l'ensemble des figures.

### DESCRIPTION DÉTAILLÉE DE MODES DE REALISATION

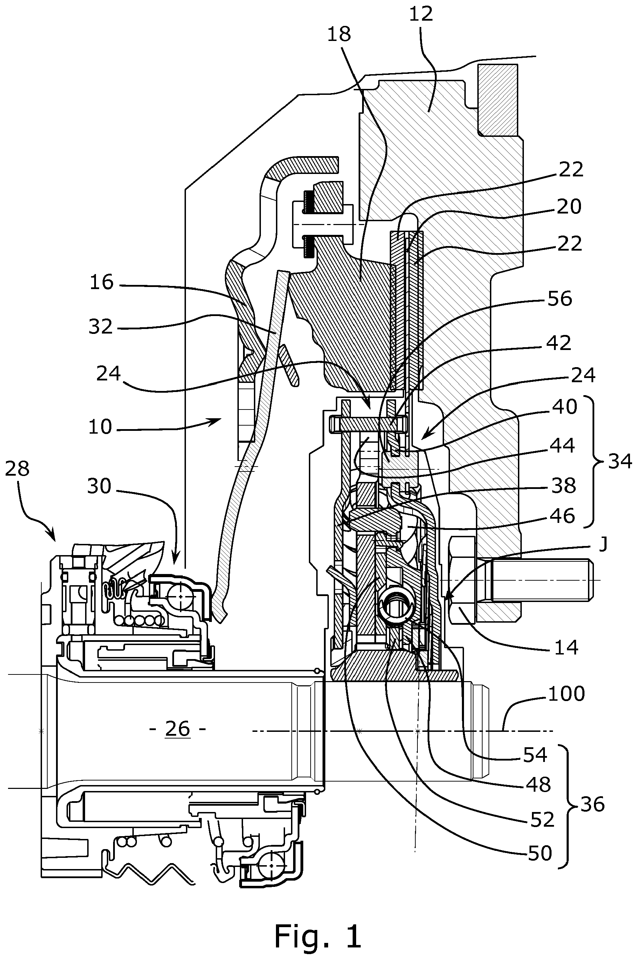

Sur la figure 1 est illustré une partie d'un mécanisme d'embrayage **10,** comportant un plateau de réaction **12** destiné à être solidarisé à un vilebrequin ou à un double volant amortisseur (non représentés) par des vis **14,** un couvercle **16** fixé au plateau de réaction **12,** un plateau de pression **18** mobile axialement par rapport au plateau de réaction **12** et un disque de friction **20** portant des garnitures de friction **22** qui viennent s'interposer entre le plateau de pression **18** et le plateau de réaction **12.** Le disque de friction **20** est monté, d'une manière qui sera explicité plus loin, sur un amortisseur de torsion **24** de manière à transmettre le couple moteur à un arbre mené **26** formé par un arbre d'entrée d'une boîte de transmission. Enfin, un actionneur **28** permet de piloter le mouvement axial du plateau de pression **18** par l'intermédiaire d'une butée tournante **30** et d'un diaphragme **32.** Le plateau de pression **18,** le plateau de réaction **12,** le disque de friction **20,** le diaphragme **32** et l'amortisseur de torsion **24** sont montés de manière à pouvoir tourner autour d'un axe de référence **100** du mécanisme d'embrayage **10.**

L'amortisseur de torsion **24** comporte un amortisseur principal **34** et un amortisseur auxiliaire **36** disposés en série. L'amortisseur principal **34** comporte deux rondelles de guidages principales **38, 40** fixées l'une à l'autre par des colonnettes **42,** un voile principal **44** apte tourner par rapport aux rondelles de guidages principales **38, 40** autour de l'axe de référence **100,** et des ressorts principaux **46** disposés ciconférentiellement entre les rondelles de guidages principales **38, 40** et le voile principal **44,** de manière à travailler, c'est-à-dire à emmagasiner ou restituer de l'énergie potentielle élastique, lorsque le positionnement angulaire relatif entre le voile principal **44** et les rondelles de guidages principales **38, 40** autour de l'axe de référence **100** varie. L'amortisseur auxiliaire **36** comporte quant à lui deux rondelles de guidage auxiliaires **48, 50** fixées l'une à l'autre par des colonnettes (non illustrées), un voile auxiliaire **52** apte tourner par rapport aux rondelles de guidage auxiliaires **48, 50** autour de l'axe de référence **100,** et des ressorts auxiliaires **54** disposés ciconférentiellement entre les rondelles de guidage auxiliaires **48, 50** et le voile auxiliaire **52,** de manière à travailler lorsque le positionnement angulaire relatif entre le voile auxiliaire **52** et les rondelles de guidage auxiliaires **48, 50** autour de l'axe de référence **100** varie.

Les rondelles de guidage **38, 40** de l'amortisseur principal **34** sont fixées au disque de friction **20.** Les rondelles de guidage **48, 50** de l'amortisseur auxiliaire **36** sont fixées au voile **44** de l'amortisseur principal **34.** Enfin, le voile **52** de l'amortisseur auxiliaire **36** est solidaire en rotation d'un moyeu cannelé emmanché sur l'arbre mené **26.** Lorsque le mécanisme d'embrayage **10** est embrayé, le diaphragme **32** met le plateau de pression **18** en appui contre le disque de friction **20** qui, pincé entre le plateau de pression **18** et le plateau de réaction **12,** transmet le couple et le mouvement de rotation au rondelles de guidage **38, 40** de l'amortisseur principal **34** et, par l'intermédiaire des étages de filtration formés par les ressorts **46** de l'amortisseur principal **34,** le voile principal **44,** les rondelles de guidage **48, 50** de l'amortisseur auxiliaire **36** et les ressorts **54** de l'amortisseur auxiliaire **54,** au voile **48** de l'amortisseur auxiliaire **36** qui entraîne l'arbre mené **26** en rotation autour de l'axe de référence **100.**

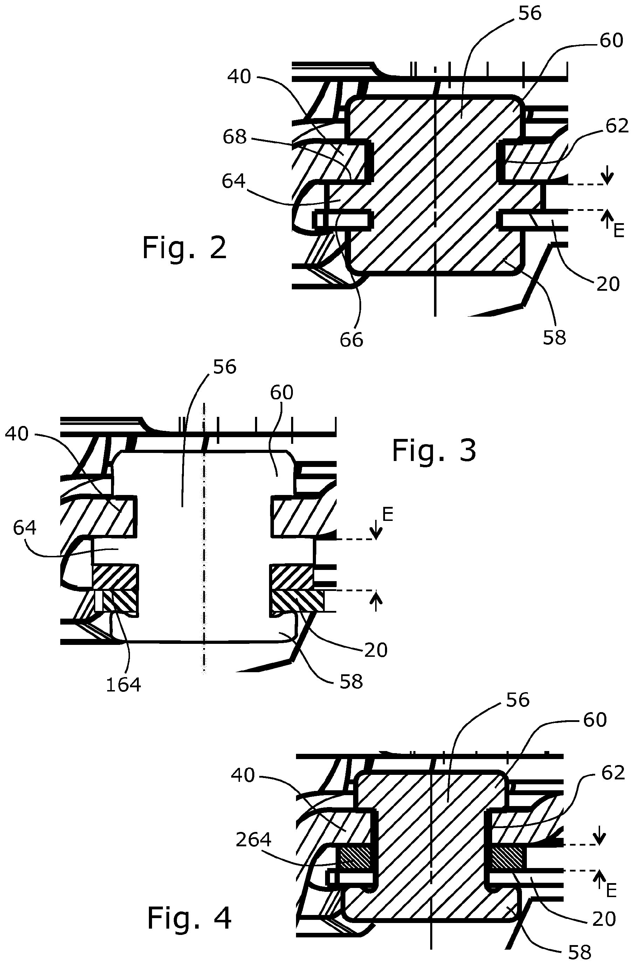

Comme illustré en détail sur la figure 2, le disque de friction **20** est fixé à l'une (**40**) des rondelles de guidage de l'amortisseur principal **34** par l'intermédiaire de rivets **56,** qui comportent deux têtes **58, 60** reliées par une tige **62** de liaison dont la partie médiane forme une collerette **64** ayant fonction d'entretoise. L'épaisseur E de la collerette **64** détermine le positionnement axial relatif entre le disque de friction **20** et la rondelle de guidage associée **40** de l'amortisseur principal **34.** Avant assemblage, le rivet **56** est sans têtes, ce qui permet de positionner une face **66** de l'entretoise **64** en appui contre le disque de friction **20** et l'autre face **68** de l'entretoise **64** contre la rondelle de guidage associée **40.** Une fois les différentes pièces positionnées, on procède au rivetage proprement dit en écrasant et aplatissant les extrémités saillantes de la tige **62,** qui forment ainsi les deux têtes **58, 60.** Avant assemblage, les rivets **56** utilisés peuvent, le cas échéant, présenter des extrémités saillantes partiellement forées, pour faciliter la déformation plastique et la formation des têtes **58, 60.** Ainsi, la rondelle de guidage 40 est pincée entre la tête 60 et la collerette 64 et le disque de friction 20 est pincé entre collerette 64 et la tête 58.

Comme l'illustre la figure 1, le jeu J entre la rondelle de guidage **40** de l'amortisseur principal **34** associée au disque de friction **20** et les vis **14** de fixation du plateau de réaction **12** au vilebrequin est très faible, et inférieur à une épaisseur E des entretoises **64,** telle qu'illustrée sur la figure 2. Ainsi, les entretoises **64** permettent, dans cette configuration spécifique, d'utiliser l'amortisseur de torsion **24** standard illustré sur la figure 1 dans un environnement où, en l'absence d'entretoise **64,** il n'aurait pas été possible d'obtenir un contact entre les garnitures de friction **22** du disque de friction **20** et le plateau de réaction **12** sans modifier la forme de la rondelle de guidage **40.** L'utilisation d'entretoises permet donc de construire une gamme de mécanismes d'embrayage **10** modulaires, ayant en commun des amortisseurs de couple **24** identiques, des disques de friction **20** identiques et se distinguant par la distance entre le disque de friction **20** et l'organe associé **40** de l'amortisseur de torsion, obtenue par la présence ou l'absence d'entretoises **64** ou en faisant varier l'épaisseur E des entretoises **64.**

L'entretoise **64** peut être formée de diverses manières. Dans le mode de réalisation de la figure 3, on prévoit deux entretoises empilées, à savoir une entretoise **64** comportant une collerette 60 formée sur un rivet **56,** et une entretoise **164** additionnelle formée par une rondelle.

Sur la figure 4, l'entretoise est formée par au moins une rondelle **264** enfilée sur la tige **62** d'un rivet **56** conventionnel, dont l'une des têtes **58, 60** est préformée, l'autre étant formée par écrasement lors de l'assemblage.

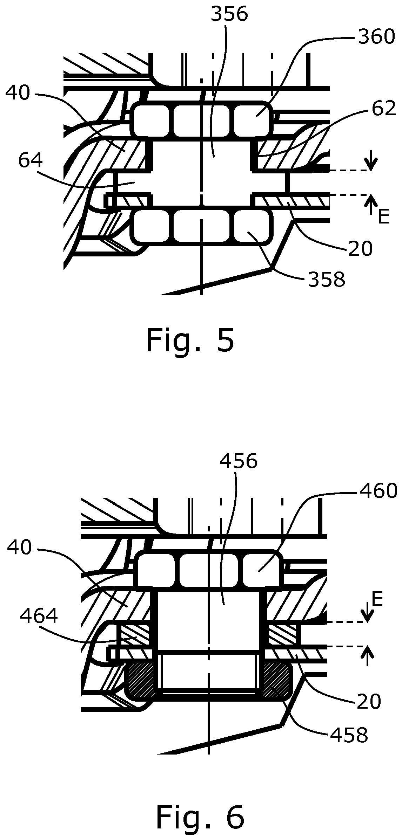

Sur la figure 5, on prévoit une tige **62** filetée à ses deux extrémités et présentant une collerette **64** intermédiaire formant l'entretoise **64,** et deux écrous **358, 360** vissés aux extrémités de la tige **62.**

Sur la figure 6, on a illustré une vis **456** et un écrou **458,** en combinaison avec une entretoise formée par une rondelle **464.** Le disque de friction **20** et la rondelle de guidage **40** associée sont dans ce cas pincés contre l'entretoise **464** par l'écrou **458** et la tête de vis **460.**

Naturellement, les exemples représentés sur les figures et discutés ci-dessus ne sont donnés qu'à titre illustratif et non limitatif. Il est explicitement prévu que l'on puisse combiner entre eux les différents modes de réalisation illustrés pour en proposer d'autres.

On peut également prévoir une entretoise **64** unique formée par un anneau, ce qui permet d'utiliser des rivets conventionnels pour fixer cette entretoise **64** annulaire d'une part au disque de friction **20** et d'autre part à la rondelle de guidage associée **40.**

L'amortisseur de torsion **24** peut ne comporter qu'un étage d'amortissement, sans amortisseur auxiliaire **36.** Le disque de friction **20** peut être fixé au voile de l'amortisseur plutôt qu'aux rondelles de guidage.

## Revendications

1. Mécanisme d'embrayage (10) comportant:
- un disque de friction (20) définissant un axe de référence (100) du mécanisme d'embrayage (10); et
- un amortisseur de torsion (24) comportant au moins un organe tournant (40) associé au disque de friction (20), solidaire du disque de friction (20), un organe tournant (44) non associé au disque de friction (20), mobile en rotation autour de l'axe de référence (100) par rapport à l'organe tournant (40) associé au disque de friction (20), et au moins un ressort (46) agencé de manière à travailler lorsque l'organe tournant (44) non associé au disque de friction (20) tourne par rapport à l'organe tournant (40) associé au disque de friction (20) autour de l'axe de référence (100),
le disque de friction (20) n'étant pas en contact direct avec l'organe tournant (40) associé au disque de friction (20),
une ou plusieurs entretoises (64, 164, 264) étant interposées entre le disque de friction (20) et l'organe tournant (40) associé au disque de friction (20), le disque de friction (20) étant fixé à l'organe tournant (40) associé au disque de friction (20) par des organes de fixation (56) comportant des tiges (62) de fixation, **caractérisé en ce que** certaines au moins des entretoises (64) sont solidaires des tiges (62) de fixation et formées d'une pièce avec les tiges (62) de fixation.

2. Mécanisme d'embrayage (10) selon la revendication 1, **caractérisé en ce que** la ou les entretoises (64, 164, 264) comportent au moins une entretoise (64, 164, 264) en appui direct sur le disque de friction (20) et au moins une entretoise (64, 264) en appui direct sur l'organe tournant (40) associé au disque de friction (20).

3. Mécanisme d'embrayage (10) selon la revendication 2, caractérisé en ce la ou les entretoises (64, 164, 264) comportent au moins une entretoise (64, 264) en appui direct sur le disque de friction (20) et sur l'organe tournant (40) associé au disque de friction (20).

4. Mécanisme d'embrayage (10) selon l'une des revendications précédentes, **caractérisé en ce que** certains au moins des organes de fixation sont des rivets (56).

5. Mécanisme d'embrayage (10) selon l'une des revendications précédentes, **caractérisé en ce que** certaines au moins des tiges de fixation sont filetées.

6. Mécanisme d'embrayage (10) selon l'une des revendications précédentes, **caractérisé en ce que** certaines au moins des entretoises (164, 264) présentent des trous traversés par les tiges (62) de fixation, et sont de préférence formées par des rondelles, de préférence des rondelles planes.

7. Mécanisme d'embrayage (10) selon l'une quelconque des revendications précédentes, **caractérisé en ce que** la ou les entretoises (64, 164, 264) sont disposées sur une face de l'organe tournant (40) associé au disque de friction (20) tournée axialement à l'opposé de l'organe tournant (44) non associé au disque de friction (20).

8. Mécanisme d'embrayage (10) selon l'une quelconque des revendications précédentes, **caractérisé en ce que** l'un des organes tournants de l'amortisseur de torsion (24) est formé par deux rondelles de guidage (38, 40) solidaires l'une de l'autre, l'autre des organes tournants de l'amortisseur de torsion (24) étant formé par un voile (44) au moins partiellement logé entre les deux rondelles de guidage (38, 40).

9. Mécanisme d'embrayage (10) selon l'une quelconque des revendications précédentes, **caractérisé en ce que** l'organe tournant (40) associé au disque de friction (20) est une tôle emboutie.

10. Gamme de mécanismes d'embrayage comportant:
- au moins un premier mécanisme d'embrayage (10) comportant un premier disque de friction (20) définissant un premier axe de référence (100) du premier mécanisme d'embrayage (10), et un premier amortisseur de torsion (24) comportant au moins un organe tournant (40) associé au premier disque de friction (20) et solidaire du disque de friction (20), un organe tournant (44) non associé au premier disque de friction (20) et mobile en rotation autour du premier axe de référence (100) par rapport à l'organe tournant (40) associé au premier disque de friction (20), et au moins un premier ressort agencé de manière à travailler lorsque l'organe tournant (44) non associé au premier disque de friction (20) tourne par rapport à l'organe tournant (40) associé au premier disque de friction (20) autour du premier axe de référence (100),
- au moins un deuxième mécanisme d'embrayage (10) comportant un deuxième disque de friction (20) définissant un deuxième axe de référence (100) du deuxième mécanisme d'embrayage (10) et un deuxième amortisseur de torsion (24) comportant au moins un organe tournant (40) associé au deuxième disque de friction (20) et solidaire du disque de friction (20), un organe tournant (44) non associé au deuxième disque de friction (20) et mobile en rotation autour du deuxième axe de référence (100) par rapport à l'organe tournant (40) associé au deuxième disque de friction (20), et au moins un deuxième ressort agencé de manière à travailler lorsque l'organe tournant (44) non associé au deuxième disque de friction (20) tourne par rapport à l'organe tournant (40) associé au deuxième disque de friction (20) autour du deuxième axe de référence (100),
**caractérisée en ce que** le premier mécanisme d'embrayage (10) est un mécanisme d'embrayage (10) selon l'une quelconque des revendications précédentes.

11. Gamme de mécanismes d'embrayage selon la revendication 10, **caractérisée en ce que** le deuxième disque de friction (20) est en contact direct avec l'organe tournant (40) associé au deuxième disque de friction (20).

12. Gamme de mécanismes d'embrayage selon la revendication 10, **caractérisée en ce que** le deuxième disque de friction (20) est distant de l'organe tournant (40) associé au deuxième disque de friction (20) grâce à une ou plusieurs deuxièmes entretoises (64, 164, 264) interposées entre le deuxième disque de friction (20) et l'organe tournant (40) associé au deuxième disque de friction (20), la ou les deuxièmes entretoises (64, 164, 264) étant agencées de telle manière que l'organe tournant (40) associé au deuxième disque de friction (20) est situé à une distance axiale du deuxième disque de friction (20) différente de la distance axiale entre l'organe tournant (40) associé au premier disque de friction (20) et le premier disque de friction (20).

## Patentansprüche

1. Kupplungsmechanismus (10), welcher umfasst:
eine Reibscheibe (20), die eine Referenzachse (100) des Kupplungsmechanismus (10) definiert; und
einen Torsionsdämpfer (24), der wenigstens ein der Reibscheibe (20) zugeordnetes drehendes Organ (40), das mit der Reibscheibe (20) fest verbunden ist, ein nicht der Reibscheibe (20) zugeordnetes drehendes Organ (44), das in Bezug auf das der Reibscheibe (20) zugeordnete drehende Organ (40) drehbeweglich um die Referenzachse (100) ist, und wenigstens eine Feder (46), die derart ausgebildet ist, dass sie zur Wirkung kommt, wenn sich das nicht der Reibscheibe (20) zugeordnete drehende Organ (44) in Bezug auf das der Reibscheibe (20) zugeordnete drehende Organ (40) um die Referenzachse (100) dreht, umfasst,
wobei sich die Reibscheibe (20) nicht in direktem Kontakt mit dem der Reibscheibe (20) zugeordneten drehenden Organ (40) befindet,
wobei ein oder mehrere Distanzstücke (64, 164, 264) zwischen der Reibscheibe (20) und dem der Reibscheibe (20) zugeordneten drehenden Organ (40) angeordnet sind, wobei die Reibscheibe (20) an dem der Reibscheibe (20) zugeordneten drehenden Organ (40) durch Befestigungsorgane (56) befestigt ist, die Befestigungsbolzen (62) umfassen,
**dadurch gekennzeichnet, dass** wenigstens einige der Distanzstücke (64) mit den Befestigungsbolzen (62) fest verbunden sind und mit den Befestigungsbolzen (62) einstückig ausgebildet sind.

2. Kupplungsmechanismus (10) nach Anspruch 1, **dadurch gekennzeichnet, dass** das oder die Distanzstücke (64, 164, 264) wenigstens ein Distanzstück (64, 164, 264), das direkt an der Reibscheibe (20) anliegt, und wenigstens ein Distanzstück (64, 264), das direkt an dem der Reibscheibe (20) zugeordneten drehenden Organ (40) anliegt, umfassen.

3. Kupplungsmechanismus (10) nach Anspruch 2, **dadurch gekennzeichnet, dass** das oder die Distanzstücke (64, 164, 264) wenigstens ein Distanzstück (64, 264) umfassen, das direkt an der Reibscheibe (20) und an dem der Reibscheibe (20) zugeordneten drehenden Organ (40) anliegt.

4. Kupplungsmechanismus (10) nach einem der vorhergehenden Ansprüche, **dadurch gekennzeichnet, dass** wenigstens einige der Befestigungsorgane Niete (56) sind.

5. Kupplungsmechanismus (10) nach einem der vorhergehenden Ansprüche, **dadurch gekennzeichnet, dass** wenigstens einige der Befestigungsbolzen mit einem Gewinde versehen sind.

6. Kupplungsmechanismus (10) nach einem der vorhergehenden Ansprüche, **dadurch gekennzeichnet, dass** wenigstens einige der Distanzstücke (164, 264) von den Befestigungsbolzen (62) durchquerte Löcher aufweisen und vorzugsweise von Scheiben, vorzugsweise ebenen Scheiben, gebildet werden.

7. Kupplungsmechanismus (10) nach einem der vorhergehenden Ansprüche, **dadurch gekennzeichnet, dass** das oder die Distanzstücke (64, 164, 264) auf einer Seite des der Reibscheibe (20) zugeordneten drehenden Organs (40) angeordnet sind, welche axial von dem nicht der Reibscheibe (20) zugeordneten drehenden Organ (44) abgewandt ist.

8. Kupplungsmechanismus (10) nach einem der vorhergehenden Ansprüche, **dadurch gekennzeichnet, dass** eines der drehenden Organe des Torsionsdämpfers (24) von zwei fest miteinander verbundenen Führungsscheiben (38, 40) gebildet wird, wobei das andere der drehenden Organe des Torsionsdämpfers (24) von einer Flachscheibe gebildet (44) wird, die wenigstens teilweise zwischen den zwei Führungsscheiben (38, 40) aufgenommen ist.

9. Kupplungsmechanismus (10) nach einem der vorhergehenden Ansprüche, **dadurch gekennzeichnet, dass** das der Reibscheibe (20) zugeordnete drehenden Organ (40) ein tiefgezogenes Blechteil ist.

10. Sortiment von Kupplungsmechanismen, welches umfasst:
wenigstens einen ersten Kupplungsmechanismus (10), der eine erste Reibscheibe (20), die eine erste Referenzachse (100) des ersten Kupplungsmechanismus (10) definiert, und einen ersten Torsionsdämpfer (24) umfasst, der wenigstens ein drehendes Organ (40), das der ersten Reibscheibe (20) zugeordnet und mit der Reibscheibe (20) fest verbunden ist, ein drehendes Organ (44), das der ersten Reibscheibe (20) nicht zugeordnet und in Bezug auf das der ersten Reibscheibe (20) zugeordnete drehende Organ (40) drehbeweglich um die erste Referenzachse (100) ist, und wenigstens eine erste Feder, die so ausgebildet ist, dass sie zur Wirkung kommt, wenn sich das nicht der ersten Reibscheibe (20) zugeordnete drehende Organ (44) in Bezug auf das der ersten Reibscheibe (20) zugeordnete drehende Organ (40) um die erste Referenzachse (100) dreht, umfasst,
wenigstens einen zweiten Kupplungsmechanismus (10), der eine zweite Reibscheibe (20), die eine zweite Referenzachse (100) des zweiten Kupplungsmechanismus (10) definiert, und einen zweiten Torsionsdämpfer (24) umfasst, der wenigstens ein drehendes Organ (40), das der zweiten Reibscheibe (20) zugeordnet und mit der Reibscheibe (20) fest verbunden ist, ein drehendes Organ (44), das der zweiten Reibscheibe (20) nicht zugeordnet und in Bezug auf das der zweiten Reibscheibe (20) zugeordnete drehende Organ (40) drehbeweglich um die zweite Referenzachse (100) ist, und wenigstens eine zweite Feder, die so ausgebildet ist, dass sie zur Wirkung kommt, wenn sich das nicht der zweiten Reibscheibe (20) zugeordnete drehende Organ (44) in Bezug auf das der zweiten Reibscheibe (20) zugeordnete drehende Organ (40) um die zweite Referenzachse (100) dreht, umfasst,
**dadurch gekennzeichnet, dass** der erste Kupplungsmechanismus (10) ein Kupplungsmechanismus (10) nach einem der vorhergehenden Ansprüche ist.

11. Sortiment von Kupplungsmechanismen nach Anspruch 10, **dadurch gekennzeichnet, dass** sich die zweite Reibscheibe (20) in direktem Kontakt mit dem der zweiten Reibscheibe (20) zugeordneten drehenden Organ (40) befindet.

12. Sortiment von Kupplungsmechanismen nach Anspruch 10, **dadurch gekennzeichnet, dass** die zweite Reibscheibe (20) von dem der zweiten Reibscheibe (20) zugeordneten drehenden Organ (40) durch ein oder mehrere Distanzstücke (64, 164, 264) beabstandet ist, die zwischen der zweiten Reibscheibe (20) und dem der zweiten Reibscheibe (20) zugeordneten drehenden Organ (40) angeordnet sind, wobei das oder die zweiten Distanzstücke (64, 164, 264) derart ausgebildet sind, dass sich das der zweiten Reibscheibe (20) zugeordnete drehende Organ (40) in einem axialen Abstand von der zweiten Reibscheibe (20) befindet, der von dem axialen Abstand zwischen dem der ersten Reibscheibe (20) zugeordneten drehenden Organ (40) und der ersten Reibscheibe (20) verschieden ist.

## Claims

1. Clutch mechanism (10) comprising:
- a friction disc (20) which defines a reference axis (100) of the clutch mechanism (10); and
- a torsion damper (24) which comprises at least one rotating member (40) which is associated with the friction disc (20) and which is fixedly joined to the friction disc (20), a rotating member (44) which is not associated with the friction disc (20) and which can be moved in rotation about the reference axis (100) relative to the rotating member (40) which is associated with the friction disc (20), and at least one spring (46) which is arranged so as to work when the rotating member (44) which is not associated with the friction disc (20) rotates relative to the rotating member (40) which is associated with the friction disc (20) about the reference axis (100),
the friction disc (20) being not in direct contact with the rotating member (40) associated with the friction disc (20),
**characterised in that** one or more spacers (64, 164, 264) are interposed between the friction disc (20) and the rotating member (40) associated with the friction disc (20), the friction disc (20) being fixed to the rotating member (40) which is associated with the friction disc (20) by fixing members (56) comprising fixing rods (62), at least some of the spacers (64) are fixedly joined to the fixing rods (62) and formed in one piece with the fixing rods (62).

2. Clutch mechanism (10) according to Claim 1, **characterised in that** the spacer(s) (64, 164, 264) comprise(s) at least one spacer (64, 164, 264) which is in direct abutment with the friction disc (20) and at least one spacer (64, 264) which is in direct abutment with the rotating member (40) associated with the friction disc (20).

3. Clutch mechanism (10) according to Claim 2, **characterised in that** the spacer(s) (64, 164, 264) comprise(s) at least one spacer (64, 264) which is in direct abutment with the friction disc (20) and the rotating member (40) which is associated with the friction disc (20).

4. Clutch mechanism (10) according to any one of the preceding claims, **characterised in that** at least some of the fixing members are rivets (56).

5. Clutch mechanism (10) according to any one of the preceding claims, **characterised in that** at least some of the fixing rods are threaded.

6. Clutch mechanism (10) according to any one of the preceding claims, **characterised in that** at least some of the spacers (164, 264) have holes through which the fixing rods (62) extend and are preferably formed by washers, preferably planar washers.

7. Clutch mechanism (10) according to any one of the preceding claims, **characterised in that** the spacer(s) (64, 164, 264) is/are arranged on a face of the rotating member (40) which is associated with the friction disc (20), which face is directed axially counter to the rotating member (44) which is not associated with the friction disc (20).

8. Clutch mechanism (10) according to any one of the preceding claims, **characterised in that** one of the rotating members of the torsion damper (24) is formed by two guiding washers (38, 40) which are fixedly joined to each other, the other of the rotating members of the torsion damper (24) being formed by a web (44) which is at least partially accommodated between the two guiding washers (38, 40).

9. Clutch mechanism (10) according to any one of the preceding claims, **characterised in that** the rotating member (40) associated with the friction disc (20) is a stamped metal sheet.

10. Range of clutch mechanisms comprising:
- at least a first clutch mechanism (10) comprising a first friction disc (20) which defines a first reference axis (100) of the first clutch mechanism (10) and a first torsion damper (24) which comprises at least one rotating member (40) which is associated with the first friction disc (20) and which is fixedly joined to the friction disc (20), a rotating member (44) which is not associated with the first friction disc (20) and which can be moved in rotation about the first reference axis (100) relative to the rotating member (40) associated with the first friction disc (20), and at least a first spring which is arranged so as to work when the rotating member (44) which is not associated with the first friction disc (20) rotates relative to the rotating member (40) which is associated with the first friction disc (20) about the first reference axis (100),
- at least a second clutch mechanism (10) which comprises a second friction disc (20) which defines a second reference axis (100) of the second clutch mechanism (10) and a second torsion damper (24) which comprises at least one rotating member (40) which is associated with the second friction disc (20) and which is fixedly joined to the friction disc (20), a rotating member (44) which is not associated with the second friction disc (20) and which can be moved in rotation about the second reference axis (100) relative to the rotating member (40) which is associated with the second friction disc (20), and at least a second spring which is arranged so as to work when the rotating member (44) which is not associated with the second friction disc (20) rotates relative to the rotating member (40) associated with the second friction disc (20) about the second reference axis (100),
**characterised in that** the first clutch mechanism (10) is a clutch mechanism (10) according to any one of the preceding claims.

11. Range of clutch mechanisms according to Claim 10, **characterised in that** the second friction disc (20) is in direct contact with the rotating member (40) associated with the second friction disc (20).

12. Range of clutch mechanisms according to Claim 10, **characterised in that** the second friction disc (20) is remote from the rotating member (40) associated with the second friction disc (20) as a result of one or more second spacers (64, 164, 264) which are interposed between the second friction disc (20) and the rotating member (40) associated with the second friction disc (20), the second spacer(s) (64, 164, 264) being arranged so that the rotating member (40) associated with the second friction disc (20) is located at an axial distance from the second friction disc (20) which is different from the axial distance between the rotating member (40) associated with the first friction disc (20) and the first friction disc (20).
